# EUROPÄISCHE PATENTSCHRIFT

(11) **EP 2 200 813 B1**
(45) Veröffentlichungstag und Bekanntmachung des Hinweises auf die Patenterteilung: **23.03.2011**
(21) Anmeldenummer: 08801346.1
(22) Anmeldetag: 01.10.2008
(51) Int. Cl.: B29C 71/00, C08J 7/18, C08J 9/40, B29C 67/00

(54) **VERFAHREN ZUM STEIGERN VON FESTIGKEIT EINES PORÖSEN KUNSTSTOFFBAUTEILES**
METHOD TO INCREASE STRENGTH OF A POROUS PLASTIC COMPONENT
PROCÉDÉ VISANT A AUGMENTER LA RESISTANCE D'UN COMPOSANT EN MATIÈRE PLASTIQUE POREUX

(30) Priorität: 11.10.2007 DE 102007049058
(43) Veröffentlichungstag der Anmeldung: 30.06.2010
(73) Patentinhaber: Voxeljet Technology GmbH, 86316 Friedberg (DE)
(72) Erfinder: EDERER, Ingo, 82269 Geltendorf (DE); GÜNTHER, Daniel, 80363 München (DE); GÜNTHER, Johannes, Franz, 86199 Augsburg (DE)
(74) Vertreter: Wagner, Sigrid
(86) Internationale Anmeldenummer: PCT/DE2008/001593
(87) Internationale Veröffentlichungsnummer: WO 2009/046696

(56) Entgegenhaltungen:
- WO-A-95/16563
- WO-A-03/089218
- US-A- 5 049 275
- US-A1- 2001 043 990

## Beschreibung

Die Erfindung betrifft ein Verfahren zum Steigern von Festigkeit eines porösen Kunstoffbauteiles gemäß dem Anspruch 1.

Bei der Verwendung generativer dreidimensionaler Prozesse, wie beispielsweise dem selektiven Lasersintern oder dem 3D-Druckverfahren, werden häufig eine gewisse Porosität aufweisende Kunststoffbauteile geschaffen.

Sowohl beim selektiven Lasersintern als auch bei einem 3D-Druckverfahren wird eine dünne Schicht einer pulverförmigen Komponente auf eine Bauplattform aufgetragen wird. Im Anschluss daran wird ein Teil des Pulvers selektiv, beispielsweise durch Aufbringen von Bindemittel, gebunden. Diese Selektion entspricht einem Schnitt durch das zu erzielende Bauteil.

Anschließend wird die Bauplattform um eine Schichtdicke abgesenkt und mit einer neuen Schicht Partikelmaterial versehen, die ebenfalls, wie oben beschrieben, verfestigt wird. Diese Schritte werden wiederholt, bis eine gewisse, erwünschte Höhe des Objektes erreicht ist. Aus den bedruckten und verfestigten Bereichen entsteht so ein dreidimensionales Objekt. Ein solches Verfahren ist beispielsweise aus der DE 69634921 bekannt.

In ähnlicher Weise arbeiten auch andere Pulver-gestützte Rapid-Prototyping-Prozesse, wie z.B. das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "generative 3D-Prozesse" zusammengefasst.

Die mittels generativer 3D-Prozesse hergestellten Bauteile weisen häufig eine gewisse Porosität auf. Die Porosität der Bauteile ist meist durch das Verfahren des selektiven Bindens bedingt. Die Verbindung durch einen Laserstrahl entspricht dem hinlänglich bekannten Sintern. Die Körner des Pulvers verbinden sich an ihren Berührpunkten durch Zusammenschmelzen. Der Raum zwischen den Körnern bleibt frei. Ähnlich sind die Verhältnisse bei Bauteilen, bei denen die selektive Aushärtung durch Eindosieren einer Flüssigkeit realisiert wird (3D-Drucken). Wird im Vergleich zur Pulvermasse pro Raumeinheit eine möglichst geringe Flüssigkeitsmenge eindosiert, entsteht ein poröser Körper. Dies ist beispielsweise aus der DE 60008778 bekannt.

Problematisch für den Einsatz solcher poröser Bauteile sind oft mangelhafte Festigkeitswerte und ungünstige Oberflächeneigenschaften.

Die Saugfähigkeit poröser Teile ermöglicht es, ähnlich dem bekannten Verfahren zur Erzeugung von Faserverbundwerkstoffen, flüssige Medien in das Bauteil einzubringen.

So ist beispielsweise aus der DE 195 45 167 A1 bekannt, ein durch selektives Lasersintern hergestelltes Modell mit Wachs zu überziehen, damit eine geschlossene Oberfläche entsteht. Anschließende Tauchprozesse in flüssigem Formmaterial erfordern ein flüssigkeitsdichtes Teil, um die Formtreue der Gussform zu gewährleisten. Die Festigkeitseigenschaften stehen hier im Hintergrund. Das Verfahren nutzt den thermischen Phasenübergang von fest zu flüssig und umgekehrt.

Nachteilig für eine Verallgemeinerung dieses Vorgehens ist, dass, je nach Infütrationsmaterial, das Bauteil erheblichen Temperaturen ausgesetzt werden muss. Zudem weisen Infiltrationswerkstoffe mit einem niedrigen Schmelzpunkt zu meist auch niedrige Festigkeitswerte auf.

DE 199 27 923 A1 offenbart ein Verfahren gemäß dem Oberbegriff des Anspruchs 1.

Beim Aufbau von Prototypen, mit den oben genannten, generativen Verfahren müssen insbesondere die Eigenschaften der verwendeten Materialien beachtet werden.

Beispielsweise ist es bekannt, zur Infiltration Harze einzusetzen, die flüssig in den porösen Körper eingebracht werden und in Form von Dispersionen unter Abdampfen des Lösungsmittels oder als Harzgemische durch eine Polymerisierung im Bauteil verfestigen. Solche Verfahren sind beispielsweise aus der WO 2005/82603 A1, der US 6,375,874 und der US 5,616,294 bekannt. Solche in diesen Dokumenten beschriebenen Dispersionen sind auf Grund der Notwendigkeit des Ausdampfens des Lösemittels nur für Bauteile mit dünnen Wandstärken geeignet. Thermische Verfahren nach dem Vorbild der Wachsinfiltration sind für die Festigkeitssteigerung, auf Grund der Temperaturempfindlichkeit für poröse Kunststoffbauteile, wenig geeignet.

Polymerisierende Gemische zum Infiltrieren sind meist 2-Kompenentensysteme, wie beispielsweise Epoxidharze. Solche Gemische erreichen hohe Festigkeitswerte. An die Eigenschaften großtechnisch polymerisierter Produkte, wie beispielsweise PE, PET, PMMA, ... reichen sie jedoch nicht heran.

Polymerisierende Gemische, wie sie aus dem Stand der Technik bekannt sind, haben folgende Grenzen.

Das polymerisierende Infiltrat bildet mit dem porösen Bauteil oder auch der Matrix einen Verbundwerkstoff, der durch die Phasengrenzen im Inneren geschwächt ist. Die Festigkeitswerte der Bauteile liegen deshalb immer unter Werten des reinen Infiltrats.

Ferner werden bei der Verwendung eines Zwei-Komponentensystem üblicherweise eine Binderkomponente und eine Harzkomponente vor dem Einbringen in das Bauteil miteinander vermischt. Die Polymerisation setzt dann zeitlich verzögert ein. Nachteilig an diesem Verfahren ist, dass ein einmal angesetztes Gemisch Innerhalb einer kurzen Zeitspanne verarbeitet werden muss. Ein Tauchverfahren, das hohe Stückzahlen und einen hohen Automatisierungsgrad ermöglicht, kann somit nicht wirtschaftlich realisiert werden. Der Auftrag erfolgt meist durch Aufstreichen mit einem Pinsel. Dieses Verfahren ist nicht automatisierbar und stellt bei komplexen Geometrien einen hohen Aufwand dar.

Es ist daher Aufgabe der vorliegenden Erfindung ein Verfahren bereitzustellen, wodurch bei einem porösen Kunststoffbauteil höhere Festigkeitswerte erreicht werden können.

Diese Aufgabe wird durch ein Verfahren gemäß dem Anspruch 1 gelöst.

Besonders bei generativen dreidimensionalen Verfahren, wie dem 3D-Druckverfahren können hohe Volumenleistungen erzielt werden, wenn bewusst poröse Bauteile aufgebaut werden.

Durch eine Infiltration nach dem dreidimensionalen Aufbau, wie beispielsweise dem Drucken, können die Eigenschaften der Bauteile gezielt verbessert werden. Zudem ist die Erstellung poröser Bauteile, die anschließend infiltriert werden, deutlich weniger zeitintensiv als die Erstellung von Bauteilen mit sehr hohem Flüssigkeitseintrag, der notwendig ist, um dichte Teile im generativen Verfahren direkt zu erstellen.

Die erreichbaren Festigkeitswerte infiltrierter Bauteile nach Verfahren des Standes der Technik sind für Prototypen oft zu niedrig, da hierbei das poröse Bauteil eine Art Matrix bildet und das Infiltrat die Hohlräume ausfüllt. Hierbei entsteht eine so genannte innere Kerbwirkung zwischen der Matrix und dem Infiltrat an den Grenzflächen, was zudem einen erheblichen Unsicherheitsfaktor darstellt. Die Festigkeiten der Bauteile streuen daher sehr stark. Zusätzlich sind aus dem Stand Technik bekannte Infiltrationsverfahren sehr arbeitsintensiv und stellen daher einen gravierenden Produktionsengpass dar.

Gemäß der vorliegenden Erfindung werden zur Infiltration nun Materialien benutzt, die die generativ erzeugte Matrix anlösen können und damit zu einem besonders homogenen Werkstoff führen. Anlösen meint also, dass eine homogene Verbindung zwischen der Matrix und dem Medium, insbesondere Infiltrat entsteht.

Gemäß einer bevorzugten Ausführungsform des erfindungsgemäßen Verfahrens erfolgt die Verfestigung des eingebrachten Mediums durch Polymerisation.

Gemäß einer besonders bevorzugten Ausführungsform der vorliegenden Erfindung kann es sinnvoll sein, dass eine Randschicht des Kunststoffbauteils im Vergleich zum übrigen Kunststoffbauteil durch chemische und/oder physikalische Maßnahmen beschleunigt verfestigt wird.

Hierdurch kann ein eventuell auftretender geometrischer Formverlust durch eine Erweichung der Bauteile bei der Verbindung des Bauteiles mit dem Medium wirksam verhindert werden.

Das Bauteil wird dabei in der Randschicht, im Gegensatz zum restlichen Bauteilvolumen, beschleunigt verfestigt und auf diese Weise ein stabiles Gerüst erzeugt. Die Erweichung durch die Anlösung der Matrix kann damit nicht die Geometrie beeinflussen. Die Randschichtverfestigung könnte beispielsweise durch zusätzliches Aufbringen von Beschleunigern und dem Einsatz von Polymerisationsmedien mit Strahlungsinitiation erfolgen.

Unter Randschicht ist gemäß der vorliegenden Erfindung der äußere Bereich des Bautelles zu verstehen.

Beschleunigt könnte derart definiert sein, dass eine Verfestigung einer Randschicht merklich schneller erfolgt als eine Verfestigung des restlichen Körpers.

Und unter Verfestigung ist nicht zu verstehen, dass eine vollständige Verfestigung stattgefunden hat. Im Sinne der Erfindung ist eine die Formstabilität, das heißt eine das Eigengewicht tragende Stabilität, gewährende Verfestigung häufig ausreichend.

Die schnellere Verfestigung der Randschicht könnte gemäß einer Ausgestaltung der vorliegenden Erfindung durch die Verwendung zweier Polymerisationssyteme mit unterschiedlichen Reaktionszeiten erfolgen.

Daneben könnte es auch vorteilhaft sein, wenn die schnellere Verfestigung der Randschicht durch den Eintrag energiereicher Strahlung, wie beispielsweise UV-Strahlung oder Mikrowellenstrahlung erreicht wird.

Eine weitere Ausgestaltung des erfindungsgemäßen Verfahrens stellt die Möglichkeit des Einbringens des Mediums in das Kunststoffbauteil mittels Eintauchen in ein Bad des Mediums dar.

Dabei könnte nun das poröse Bauteil automatisch in einem Tauchbad infiltriert werden. Das Tauchbad selbst härtet nicht aus, so dass ein dauerhafter und wirtschaftlicher Einsatz des Tauchbades gewährleistet ist.

Die Flüssigkeiten des Tauchbades ergeben aber nach der Polymerisation hohe Festigkeitseigenschaften. Das Material des porösen Bauteils geht mit dem Infiltrat eine Verbindung ein, die einem homogenen Werkstoff gleicht. Die Aushärtung des Harzes sollte in vorteilhafter Weise im Zeitbereich von wenigen Minuten erfolgen.

Bei dem erfindungsgemäßen Verfahren kann gemäß einer bevorzugten Ausführungsform zur Härtung der Randschicht das Kunststoffbauteil ferner in ein Bad mit einem Beschleuniger eingetaucht werden.

Ferner kann es gemäß der vorliegenden Erfindung vorteilhaft sein, wenn das Bauteil zumindest beim Einbringen von Medium und/oder energiereicher Strahlung gedreht wird.

Dieses Drehen könnte dabei um eine oder mehrere Achsen erfolgen.

Gemäß einer besonders bevorzugten Ausführungsform könnte zur Bewegung des Bauteils ein Drehtisch mit einem oder mehreren Freiheitsgraden vorgesehen sein. Um beim Einsatz der Strahlungshärtung den Zutritt der Strahlung zu gewährleisten, wird das Bauteil in einer möglichst wenig die Strahlung abschirmenden Halterung, beispielsweise aus Drähten gehalten. Eine einfache Ausführung stellt ein Rost dar, der mit einer Drehachse verbunden ist.

Ein Materialsystem zur Durchführung der vorliegenden Erfindung umfasst ein Medium zum Einbringen in ein eine Porosität aufweisendes Kunststoffbauteil. Das Medium weist dabei einen Stoff auf, der das Kunststoffbauteil zumindest teilweise löst und mit diesem eine homogene Verbindung eingeht.

Vorzugsweise ist das Medium hierbei ein Monomer.

Gemäß einer besonders bevorzugten Ausführungsform weist das Medium zumindest einen Bestandteil auf, der aus der gleichen Substanzklasse ist wie ein Kunststoffbestandteil des Kunststoffbauteiles.

Als Werkstoff in dem Medium ist vorzugsweise ein Monomer enthalten, das auch ein Bestandteil der Brücken oder der Körner der Matrix, also des Kunststoffbauteiles, ist, oder ein fremdartiges Monomer, das aber den generativ erzeugten Körper anlöst. Auf Grund der Anlösung durch die Flüssigkeit verfestigt sich der generativ erzeugte Körper in homogener Weise.

Ein derartiges Medium oder Infiltrat kann bedingt durch die Ähnlichkeit seiner Eigenschaften mit dem Grundwerkstoff des Kunststoffbauteiles besonders tief in das Bauteil eindringen. Überschüssiges Material tropft vom Bauteil ab und hinterlässt keine Oberflächenfehler. Wird eine Komponente des polymerisierenden Materials während der generativen Erstellung des Bauteils eingebracht, könnte vorzugsweise auch ein Tauchverfahren mit einem langzeitständigen Tauchbad realisiert werden.

Gemäß einer Ausführungsform des Materialsystems weißt das Materialsystem ferner einen Katalysator oder/und einen Vernetzer auf.

Darüberhinaus kann es vorteilhaft sein, wenn ferner ein Photoinitiator vorgesehen ist.

Dabei könnte es sein, dass der Photoinitiator im Medium vorgesehen ist.

Gemäß einer Ausführungsform des Materialsystems weisen das Kunststoffbauteil und das Medium ein Metacrylat auf.

Sowohl das erfindungsgemäße Materialsystem als auch das erfindungsgemäße Verfahren können vorzugsweise zum Infiltrieren von porösen Kunststoffbauteilen, insbesondere von mittels 3-d-Druckverfahren hergestellten Kunststoffbauteilen verwendet werden.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
- Figur 1: eine uninfiltrierte und eine infiltrierte Matrix;
- Figur 2: eine infiltrierte Matrix gemäß einer Ausführungsform eines Verfahren und eines Materialsystems der vorliegenden Erfindung;
- Figur 3: eine Randschichthärtung gemäß einer bevorzugten Ausführungsform der vorliegenden Erfindung;
- Figur 4: ein Tauchbad gemäß einer bevorzugten Ausführungsform der vorliegenden Erfindung;
- Figur 5: ein Tauchbad gemäß einer weiteren bevorzugten Ausführungsform der vorliegenden Erfindung;
- Figur 6: das Bestrahlen des Bauteiles gemäß einer bevorzugten Ausführungsform der vorliegenden Erfindung und ein Sprühverfahren zum Flüssigkeitsauftrag gemäß einer bevorzugten Ausführungsform der vorliegenden Erfindung;
- Figur 7: eine Halterung gemäß einer bevorzugten Ausführungsform der vorliegenden Erfindung.

Gemäß der vorliegenden Erfindung soll ein Medium 5 in ein Kunststoffbauteil 10 eingebracht werden. Grundlage hierfür ist ein poröses Bauteil 10.

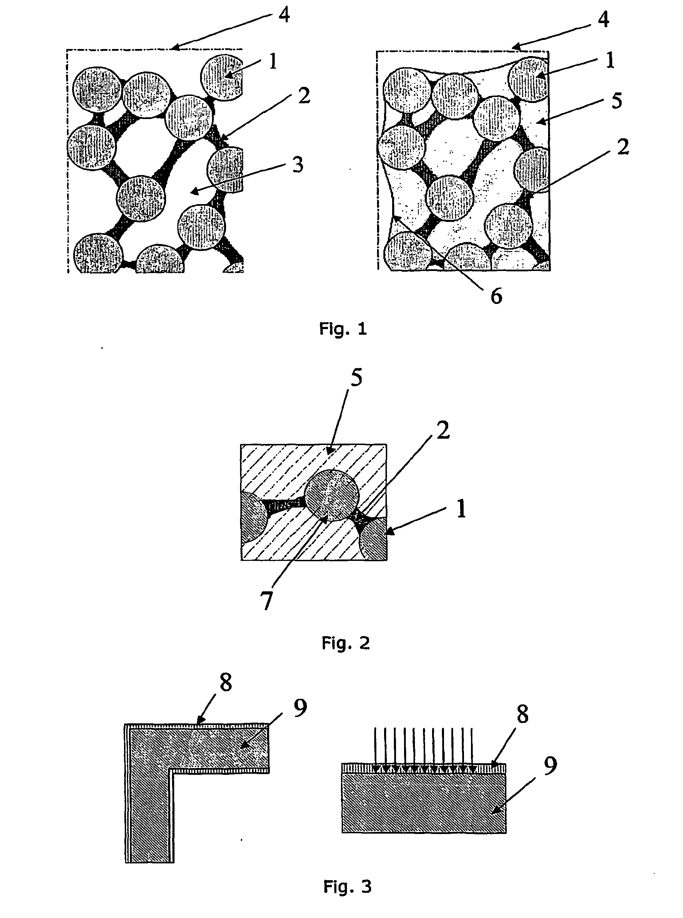

Wie der Figur 1 zu entnehmen ist, ist ein poröses Bauteil 10, bzw. die Matrix 4 durch Körner 1 und Verbindungsbrücken 2 gebildet und zwischen den Körnern 1 befinden sich die Hohlräume 3 bzw. Poren der Matrix 4.

Die vorliegende Erfindung bezieht sich auf Körper deren Körner aus Kunststoff bestehen. Die Brücken 2 der Matrix 4 können aus einem den Körnern 1 ähnlichen oder nicht ähnlichen Material bestehen.

Die Verbindungsbrücken 2 zwischen den Körnern 1 können bei der Bildung des Kunststoffbauteils 10, bzw. Matrix 4 mittels verschiedenen Verfahren erzeugt werden. Bei Bauteilen, die mit Hilfe des Lasersinterprozess hergestellt wurden, entstehen die Brücken 2 aus geschmolzenem Material, das durch Wärmeeinwirkung des Laserstrahles entsteht. Das bedeutet, dass die Brücken 2 aus dem Material der Körner 1 gebildet werden.

Durch 3D-Druckverfahren können Brücken 2 sowohl aus dem Werkstoff der Körner 1, beispielsweise durch Eindosieren eines Lösungsmittels, als auch aus einem weiteren Werkstoff, beispielsweise durch Einbringen einer polymerisierenden Flüssigkeit, gebildet werden.

Vorzugsweise werden poröse Kunststoffbauteile verwendet, bei denen die Brücken 2 und der Werkstoff der Körner 1 einem chemisch ähnlichen Kunststoffsystem angehören.

Über die Temperaturführung beim Lasersinterprozess und die eindosierte Menge des Bindermaterials beim 3D-Drucken kann die Porosität des Bauteils in gewissen Grenzen gesteuert werden.

Vorzugsweise wird ein flüssiges Medium verwendet, das in seiner chemischen Zusammensetzung dem Werkstoffsystem von Körnern 1 und Brücken 2 entspricht. Nach dem Benetzen des porösen Körpers dringt das Medium 5 durch Kapillarwirkung in die Hohlräume 3 ein. Durch die Verfestigung des Mediums bzw. Infiltrats 5 bildet sich ein dichter Körper.

Von der Oberfläche 6 des Bauteils 10 tropft überschüssiges Material 5 ab und nach Verfestigung besitzt das Kunststoffbauteil eine glattere Oberfläche als im uninfiltrierten Zustand.

In Figur 2 ist dargestellt, dass gemäß der vorliegenden Erfindung zum Erreichen hoher Festigkeiten es sich als vorteilhaft erwiesen hat, wenn das Medium 5 bezüglich der Matrix 4 eine Lösekraft aufweist, die vorzugsweise nicht unerheblich sein sollte. Mitteils eines solchen Mediums 5 ist es möglich die Körner 1 und Brücken 2 anzulösen 7 und dadurch beim Verfestigen einen homogenen Verbund zu bilden.

Bevorzugt weist das Medium 5 Monomere auf, die gegebenenfalls unter Zusatz von Hilfsstoffen durch die Bildung von Molekülketten/Strukturen im bzw. mit dem Bauteil 10 verfestigen.

Die Polymerisation kann dabei durch die Reaktionstypen Polyaddition, Polykondensation, radikalische und ionische Polymerisation oder Ringöffnungspolymerisation stattfinden. Je nach Anwendungszweck können Homopolymere, als Kette eines Monomers, oder Copolymere durch die Polymerisation unterschiedlicher Monomere eingesetzt werden.

Die eingesetzten Monomere weisen bevorzugt eine niedrige Viskosität auf. Je nach Reaktionstyp enthält das Medium 5, neben verschiedenen Monomeren, weitere Bestandteile. Unter anderem können reaktionsstartende Initiatoren, beschleunigende Katalysatoren und festigkeitssteigernde, vernetzende Bestandteile dem Medium 5 zugesetzt werden. Diese Stoffe können des Weiteren zur Steuerung des Reaktionsablaufes genutzt werden. Zusätzlich können reaktionshemmende Stoffe- Inhibitoren- enthalten sein.

Die zur Bildung eines polymerisierenden Stoffes notwendigen Komponenten können in getrennten Phasen der Werkstückerstellung eingebracht werden. Es können initiierende Komponenten oder Katalysatoren im Pulver bzw. den Körnern 1 oder den Brücken 2 des Bauteils 10 beim generativen Bauprozess eingebracht werden. Diese Komponenten können entweder im Bauprozess und bei der Infiltration eine chemische Funktion erfüllen, oder es werden zwei getrennte Systeme realisiert.

Gemäß einer bevorzugten Ausführungsform der Erfindung wird, wie in Figur 3 gezeigt, bei dem erfindungsgemäßen Verfahren eine Matrixanlösung durchgeführt und eine Stabilisierung der Randschicht 8 des Bauteils 10 erzeugt. Vorzugsweise wird dies durch zwei zeitlich getrennt reagierende Polymerisationssysteme erreicht. Das schnelle System erzeugt eine dünne, feste Randschicht 8 in vorzugsweise wenigen Sekunden.

Da die Reaktionswärme bei einer schnellen, kompletten Aushärtung des Bauteiles 10 die Temperatur im Bauteil stark ansteigen lässt, kann es zu einer thermischen Erweichung des Bauteils kommen. Deshalb findet die zweite Reaktion, die den Großteil bzw. "inneren" Teil des Werkstoffvolumens 9 verfestigt (Hauptreaktion), in einem zeitlich größeren Rahmen statt.

Bevorzugt für die zweite Polymerisierungsreaktion wird ein Initiierungssystem, das im pulverförmigen Material gebunden ist oder auf dessen Oberfläche vorhanden ist, also während der generativen Erzeugung des Bauteils eingebracht wird. Dieses System kann beispielsweise eine radikalische Polymerisation starten.

Besonders bevorzugt wird ein System bei dem das pulverförmige Material, das das poröse Bauteil bildet, aus Polymethylmetacrylat (PMMA) oder Polyethylmetacrylat (PEMA) besteht. Im Korn ist der Initiator Dibenzolperoxid (BPO) enthalten. Das BPO kann über die Lösewirkung des Monomers in der Infiltrationsflüssigkeit gegenüber dem Korn der Reaktion zugänglich gemacht werden.

Ebenso bevorzugt wird ein System zur Initiierung mit Ethylbarbitursäure. Mit dieser wird ein PMMA- oder PEMA- Korn ummantelt.

In der Flüssigkeit zur Infiltration, dem Medium 5 fehlt beim bevorzugten Verfahren eine zur einer eigenständigen Aushärtung notwendige Komponente (Initiator oder Katalysator/Beschleuniger). Das Infiltrat 5 härtet also nur im Kontakt mit dem Bauteil 10 aus. Dadurch kann es In einem Bad für eine automatisierte Tauchinfiltration bereitgehalten werden.

Bevorzugt zur Infiltration wird ein Gemisch aus einem Monomer oder einer Monomermischung und einem Katalysator. Zusätzlich kann ein Vernetzer zugegeben werden. Monomere mit niedriger Viskosität sind hier besonders geeignet. Zusammen mit dem Initiator im Bauteil ergibt sich ein polymerisationsfähiges Gemisch.

Besonders bevorzugt wird ein Gemisch aus 2-Hydroxyethylmethacrylat (HEMA) und N,N-Dimethyl-p-Toluidin (DMPT). Dabei wirkt HEMA als Monomer und DMPT als Katalysator der die Initiierung durch das BPO aus dem Korn beschleunigt.

Zur Steuerung der Reaktionswärme bei der Hauptverfestigung werden Vernetzer zugegeben. Bevorzugt wird Ethylenglykol-Dimethylmetacrylat (EGDMA) verwendet, das die Reaktionsgeschwindigkeit unter bestimmtem Reaktionsbedingungen herabsetzt.

Ebenso bevorzugt ist ein Gemisch aus HEMA und Kupfer-AcetylAcetonat (CuAA). Hiermit kann ein System mit ethylbarbitursäureumantelten Körnern initiiert werden.

Die beschleunigte Verfestigung des Randbereichs 8 kann über unterschiedliche Wege erreicht werden. Zum Einen kann eine flüssige Komponente verwendet werden. Diese kann einen Initiator oder Katalysator in hoher Menge, im Vergleich zum eigentlichen Infiltrationsgemisch, enthalten. Zum Anderen kann dem Infiltrationsgemisch eine durch Strahlung aktivierbare Komponente beigemischt werden. Weiterhin kann eine Komponente gasförmig vorliegen und somit mit allen Rändern des Bauteils gleichmäßig in Kontakt kommen.

Der Einsatz einer flüssigen Komponente erfolgt in einem zusätzlichem Tauchschritt, der sich an die eigentliche Infiltration anschliesst. Bei der zusätzlichen Flüssigkeit kann ein Katalysator oder ein Initiator verwendet werden. Bevorzugt zur Randschichthärtung durch eine Flüssigkeit wird der Katalysator DMPT bei einem Korn mit BPO und oder CuAA bei einem Ethylbarbitursäuresystem in den das Bauteil getaucht wird. Durch die niedrige Diffusion im Bauteil wird bei diesem Vorgehen nur eine Randschicht verfestigt.

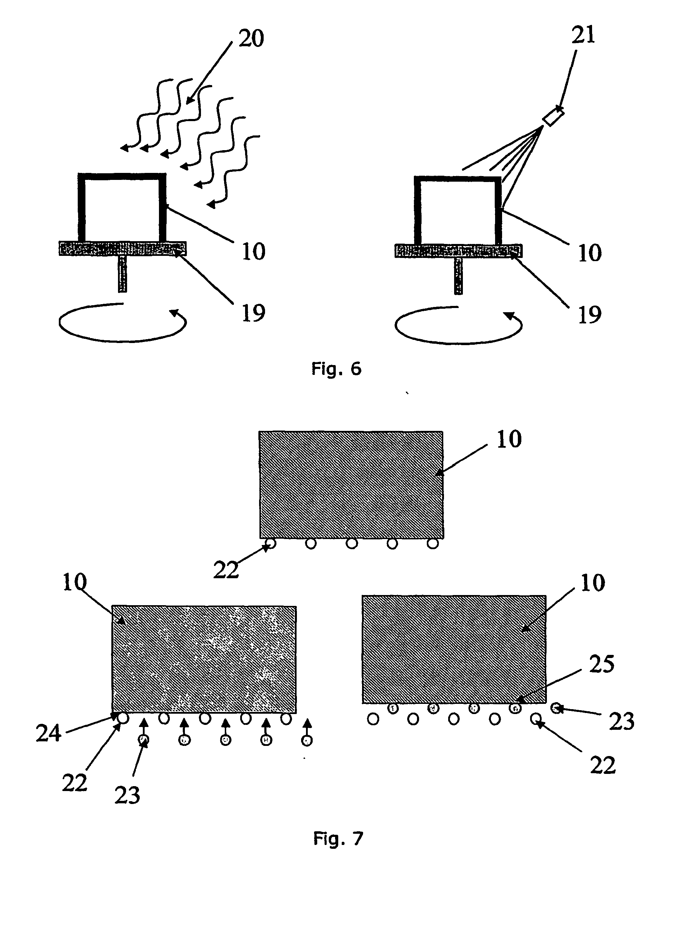

Die Benetzung der Randschicht 8 kann, wie in Figur 6 gezeigt, anstatt mit einem Tauchverfahren mit einem Sprühnebelsystem durchgeführt werden. Dazu wird das Bauteil 10 beispielsweise auf einem Drehtisch 19 gedreht. Eine oder mehrere Spritzdüsen 21 erzeugen einen Nebel aus der Flüssigkomponente zur Aktivierung der Polymerisation der Randschicht.

Zur besseren Kontrolle der einzelnen gewünschten Reaktionen kann erweiternd zum oben genannten System (Polymerisationssystem mit zwei unterschiedlichen Initiatorkonzentrationen) ein Polymerisatlonssystem mit mehreren *unabhängigen* Initiatorsystemen verwendet werden. Ein Ausführungsbeispiel stellt ein mit Ethylbarbitursäure ummanteltes Korn dar, das im Inneren BPO enthält. Durch Zusatz der Katalysatoren CuAA oder DMPT kann jetzt gezielt ein System zur Reaktion gebracht werden. Zudem kann auch ein Photoinitiator als zweites Initiationssystem dienen.

Bevorzugt wird für die Strahlungshärtung der Randschicht ein Photoinitiator des Typs Diphenyl (2,4,6-Trimethylbenzoyl) Phosphin Oxid (TPO). Mit Hilfe dieses Initiators können durch UV-Strahlung Radikale für die Polymerisation erzeugt werden. Es können alle Strahlungstypen von UVA, UVB bis UVC eingesetzt werden. Bevorzugt für die Härtung wird UVA-Strahlung.

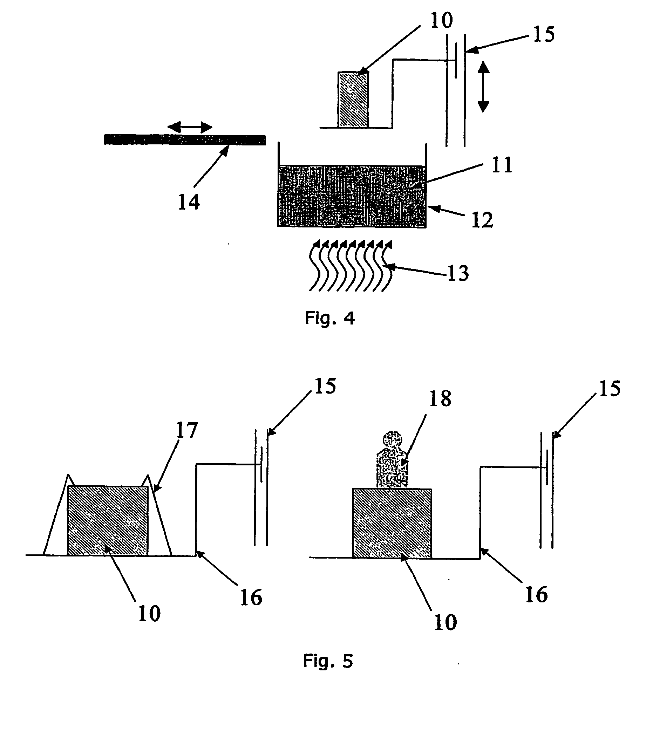

Zur Infiltration, siehe Figur 4, wird das Bauteil 10 in ein Bad 12 mit den flüssigen Komponenten 11 getaucht. In diesem Bad befinden sich alle Komponenten die mit der Komponente im Bauteil 10 ein reaktions- und polymerisationsfähiges Gemisch bilden. Die wesentliche Anforderung an die Mischung ist, dass die Komponenten im Bad ohne die Komponente im Bauteil nicht oder nur sehr langsam reagieren und verfestigen.

Besonders bevorzugt wird gemäß obiger Ausführungen ein Infiltrationsgemisch aus 79 % HEMA, 20% EGDMA, 0,5 % DMPT, 0,5 % TPO.

Die Vorrichtung zur Tauchinfiltration beinhaltet ein Bad 12, eine flüssigkeitsdurchlässige Halterung 16 zum Tauchen und eine Niederhaltevorrichtung 17,18, die das Aufschwimmen des Bauteils im Tauchbad verhindert (siehe Figur 4 und 5).

Das Tauchbad besteht aus einem chemisch beständigen Behälter 12. Bevorzugt wird Edelstahl. Je nach Infiltrationsmedium kann es für eine Senkung der Viskosität des Infiltrats beheizt 13 werden. Ein Verschluss 14 schützt das Bad vor Verschmutzung und Eintritt von Strahlung die zu einer unerwünschten Polymerisierung führen kann. Eine Erweiterung stellt eine Kühlvorrichtung 13 dar, die eine besonders gute Konservierung der Infiltrationsflüssigkeit ermöglicht.

Bevorzugt für die flüssigkeitsdurchlässige Halterung 16 wird ein Korb aus Draht. Auf diesem befindet sich zum Niederhalten des Bauteils Klammern 17 oder ein Gewicht 18. Eine Achse zur Absenkung 15 ermöglicht ein automatisierbares und gleichmäßiges Tauchen der Bauteile.

Die Figur 6 zeigt die Aushärtung der Randschicht mit UV-Strahlung 20. Die Wahl der Prozessparameter erfolgt daher derart, dass nur eine sehr dünne Schicht im Randbereich verfestigt wird. Dadurch wird ein Verzug durch starke Eigenspannungen vermieden. In der Monomermischung befinden sich dazu 0,5 % Gew. TPO. Die Belichtung erfolgt mit UVA-Strahlungsröhren mit einer Eingangsleistung von 75 W in einem Abstand von 10 cm.

Um Inhomogenitäten der UV-Strahlungsquelle auszugleichen wird das Bauteil im Strahlungsfeld bewegt. Die Bewegung ermöglicht den Zutritt von UV-Strahlung an ansonsten abgeschattete Bereiche. Die Bewegung kann durch Rotation um alle Raumachsen erfolgen. Bevorzugt wird eine Drehbewegung um nur eine Achse.

Zur Bewegung des Bauteils wird ein Drehtisch 19 mit einem oder mehreren Freiheitsgraden bevorzugt. Um den Zutritt der Strahlung zu gewährleisten, wird das Bauteil in einer Halterung aus Drähten gehalten, die einen möglichst kleinen Querschnitt ausweisen. Eine einfache Ausführung stellt ein Rost dar, der mit einer Drehachse verbunden ist.

Um ein Verkleben der Bauteile mit dem Drahtgitter zu verhindern, kann eine besondere Vorrichtung vorgesehen werden. Durch Bewegung werden dabei die Auflagepunkte des Bauteils 10 in einer zeitlichen Abfolge verändert. Eine einfache, in Figur 7 dargestellte Ausführung stellt zwei Rostgitter 22, 23 dar, die ineinander verbaut sind. Ein Rost wird gegen den zweiten dabei in seiner Höhe verschoben. Dadurch wird das Bauteil vom jeweils höheren Rost übernommen und die Auflagepunkte ändern sich 24,25.

## Patentansprüche

1. Verfahren zum Steigern von Festigkeit eines porösen Kunststoffbauteiles (10), wobei unter Verwendung von Kunststoffkörnern (1) mittels generativer dreidimensionaler Verfahren ein poröses Kunststoffbauteil (10) aufgebaut wird, anschließend Mediun (5) in das eine Porosität aufweisende Kunststoffbauteil eingebracht wird **dadurch gekennzeichnet, daß** das Medium (5) einen das Kunststoffbauteil lösenden. Bestandteil aufweist und mit dem Kunststoffbauteil eine homogene Verbindung eingeht.

2. Verfahren nach Anspruch 1, wobei eine Verfestigung des eingebrachten Mediums durch Polymerisation erfolgt.

3. Verfahren nach einem der vorhergehenden Ansprüche, wobei eine Randschicht des Kunststoffbauteils im Vergleich zum übrigen Kunststoffbauteil durch chemische und/oder physikalische Maßnahmen beschleunigt verfestigt wird.

4. Verfahren nach Anspruch 3, wobei die schnellere Verfestigung der Randschicht (8) durch Verwendung zweier Polymerisationssyteme mit unterschiedlichen Reaktionszeiten erfolgt.

5. Verfahren nach einem der vorhergehenden Ansprüche 3 oder 4, wobei die schnellere Verfestigung der Randschicht durch den Eintrag energiereicher Strahlung, insbesondere UV-Strahlung erfolgt.

6. Verfahren nach einem der vorhergehenden Ansprüche, wobei das Einbringen des Mediums in das Kunststoffbauteil mittels Eintauchen in ein Bad des Mediums erfolgt.

7. Verfahren nach einem der vorhergehenden Ansprüche, wobei zur Härtung der Randschicht das Kunststoffbauteil ferner in ein Bad (12) mit einem Beschleuniger eingetaucht wird.

8. Verfahren nach einem der vorhergehenden Ansprüche, wobei das Bauteil zumindest beim Einbringen von Medium und/oder energiereicher Strahlung gedreht wird.

9. Verfahren nach Anspruch 8, wobei das Drehen um eine oder, mehrere Achsen erfolgen kann.

## Claims

1. Method for increasing strength of a porous construction part made of synthetic material (10) wherein a porous construction part (10) is assembled using synthetic particles (1) by applying a generative three dimensional method, subsequently medium (5) is introduced into a porosity exhibiting construction part made of synthetic material **characterised in that** the medium (5) comprises a component which solves the construction part made of synthetic material and which creates a homogenous binding with the construction part made of synthetic material.

2. Method according to claim 1 wherein a hardening of the introduced medium is performed by polymerisation.

3. Method according to any of the preceding claims wherein hardening of an outer layer of the construction part made of synthetic material in comparison to the remaining construction part made of synthetic material is accelerated by chemical and/or physical means.

4. Method according to claim 3 wherein the faster hardening of the outer layer (8) is effected by use of two polymerisation systems with different reaction times.

5. Method according to any of the preceding claims 3 or 4 wherein the faster hardening of the outer layer is effected by way of introduction of an energy-rich radiation, in particular UV-radiation.

6. Method according to any of the preceding claims wherein the introduction of the medium into the construction part made of synthetic material is effected by way of immersion into a bath of medium.

7. Method according to any of the preceding claims wherein the construction part made of synthetic material furthermore is dipped into a bath (12) containing an accelerater for the hardening of the outer layer.

8. Method according to any of the preceding claims wherein the construction part is rotated at least during the introduction of medium and/or energy rich radiation.

9. Method according to claim 8 wherein the rotation may be effected around one or several axes.

## Revendications

1. Procédé visant à augmenter la résistance d'un composant (10) en matière plastique poreux, dans lequel on produit d'abord un composant (10) en matière plastique poreux par utilisation des granulés plastiques (1) dans des procédés génératifs tridimensionnels, et ensuite, on introduit dans ledit composant en matière plastique poreux un médium (5), ledit procédé étant **caractérisé en ce que** ledit médium (5) contient une substance apte à dissoudre ledit composant en matière plastique et formant un composé homogène avec ledit composant en matière plastique.

2. Procédé selon la revendication 1, dans lequel ledit médium est durci par polymérisation.

3. Procédé selon l'une quelconque des revendications précédentes, dans lequel une couche périphérique dudit composant en matière plastique est durcie de manière accélérée par rapport aux autres parties dudit composant en matière plastique par des méthodes chimiques et/ou physiques.

4. Procédé selon la revendication 3, dans lequel le durcissement accéléré de ladite couche périphérique (8) est réalisé par utilisation de deux systèmes de polymérisation à temps de réaction différents.

5. Procédé selon l'une quelconque des revendications précédentes 3 ou 4, dans lequel le durcissement accéléré de ladite couche périphérique est réalisé par exposition à un rayonnement riche en énergie, notamment un rayonnement UV.

6. Procédé selon l'une quelconque des revendications précédentes, dans lequel l'introduction dudit médium dans ledit composant en matière plastique est réalisée par immersion dudit composant dans une cuve comprenant ledit médium.

7. Procédé selon l'une quelconque des revendications précédentes, dans lequel ledit composant en matière plastique est en outre immergé dans une cuve (12) comprenant un accélérateur pour le durcissement de ladite couche périphérique.

8. Procédé selon l'une quelconque des revendications précédentes, dans lequel ledit composant est mis en rotation au moins pendant l'introduction dudit médium et/ou l'exposition audit rayonnement riche en énergie.

9. Procédé selon la revendication 8, dans lequel ladite rotation peut être réalisée autour d'un ou plusieurs axes.
